# EUROPÄISCHE PATENTSCHRIFT

(11) **EP 1 406 506 B1**
(45) Veröffentlichungstag und Bekanntmachung des Hinweises auf die Patenterteilung: **09.07.2008**
(21) Anmeldenummer: 00993840.8
(22) Anmeldetag: 29.11.2000
(51) Int. Cl.: A23J 1/14, A23J 3/14, A23L 1/211, A23L 1/20

(54) **VERFAHREN ZUR HERSTELLUNG VON PROTEINPRÄPARATEN MIT WEITGEHEND GLEICHBLEIBENDEN EIGENSCHAFTEN BEZÜGLICH LÖSLICHKEIT UND FUNKTIONALITÄT INNERHALB EINES PH-BEREICHES VON ETWA PH 3 BIS PH 10**
METHOD FOR THE PRODUCTION OF PROTEIN PREPARATIONS WITH ESSENTIALLY CONSTANT PROPERTIES WITH REGARD TO SOLUBILITY AND FUNCTIONALITY WITHIN A PH RANGE FROM ABOUT PH 3 TO PH 10
PROCEDE DE PRODUCTION DE PREPARATIONS PROTEINIQUES AUX PROPRIETES RESTANT SENSIBLEMENT LES MEMES QUANT A LEUR SOLUBILITE ET A LEUR FONCTIONNALITE DANS LA GAMME DE PH ALLANT ENVIRON DU PH 3 AU PH 10

(30) Priorität: 21.02.2000 DE 10007978; 29.04.2000 DE 10021229
(43) Veröffentlichungstag der Anmeldung: 14.04.2004
(73) Patentinhaber: Fraunhofer-Gesellschaft zur Förderung der angewandten Forschung e.V., 80686 München (DE)
(72) Erfinder: WÄSCHE, Andreas, 85416 Langenbach (DE); LUCK, Thomas, 80992 München (DE); HOLLEY, Wolfgang, 84079 Bruckberg (DE); DUDEK, Stefanie, 5275 HB Den Dungen (NL)
(86) Internationale Anmeldenummer: PCT/EP2000/011970
(87) Internationale Veröffentlichungsnummer: WO 2001/062101

(56) Entgegenhaltungen:
- EP-A- 0 261 586
- DD-A- 291 472
- US-A- 4 428 876
- US-A- 5 322 839

## Beschreibung

### Technisches Gebiet

Die Erfindung bezieht sich auf ein Verfahren zur Gewinnung von Proteinpräparaten mit weitgehend gleichbleibenden funktionellen Eigenschaften innerhalb eines breiten pH-Bereiches von etwa pH 3 bis pH 10 mittels Extraktion aus einem proteinhaltigen Ausgangsprodukt, nämlich Leguminosen, Getreide oder Ölsaaten. Ferner wird ein diesbezügliches Proteinpräparat beschrieben sowie dafür geeignete Verwendungen.

### Stand der Technik

Proteine bzw. Proteinpräparate gelten als Rohstoffe für die Lebens- und Futtermittelindustrie und finden vielfache Verwendung in der technischen Chemie, beispielsweise zur Herstellung von Klebstoffen, Emulsionen für fotografische Schichten oder Kosmetika, um nur einige Anwendungen zu nennen.

Die große Bedeutung der Proteinpräparaten für alle Lebewesen, für Produkte und Stoffe der gesamten Nahrungskette sowie für eine Vielzahl von Produkten und Stoffen für technische Einsatzzwecke rührt von den funktionellen Eigenschaften der einzelnen Proteine her, wie beispielsweise die Wasser-, und/oder Ölbindung, Schaumbildungsvermögen, ferner die Dispergierbarkeit, Löslichkeit, Gelbildungseigenschaft, Viskosität, Emulgierfähigkeit sowie Temperaturstabilität.

Je nach Art der Proteine sind ihre funktionellen Eigenschaften unterschiedlich ausgebildet und ändern sich zumeist in Abhängigkeit bestimmter Parameter, wie beispielsweise in Abhängigkeit von der Umgebungstemperatur oder dem pH-Wert. Je nach technischen Anforderungen können durch die Wahl äußerer Parameter die funktionellen Eigenschaften von Proteinpräparaten gezielt eingestellt werden, wie es beispielsweise aus der DE 197 21 079 A1 hervorgeht. So ist es möglich, die Löslichkeit, Viskosität und andere bestimmte anwendungstechnische-funktionelle Eigenschaften durch eine entsprechende Wärmebehandlung gezielt einzustellen.

Bei der industriellen Herstellung bzw. Gewinnung von Proteinpräparaten, die auf pflanzlichen Proteinen beruhen, haben bei den Leguminosen Lupinensamen sowie Erdnüsse, Erbsen und Sojabohnen als Ausgangsprodukt die größte Bedeutung unter allen anderen pflanzlichen Ausgangsstoffen, zumal die als Leguminosen bezeichneten Hülsenfrüchte einen Proteinanteil von ca. 40 % aufweisen. Auch stellen Ölsaaten, wie beispielsweise Mohn, Sesam, Kokusnuss, Mandeln, Leinsaat, Raps, Sonnenblume etc., sowie Getreide wie Weizen, Mais, Roggen, etc. pflanzliche Ausgangsprodukte zur Gewinnung von Proteinpräparaten dar, wenngleich sie auch über einen etwas geringeren Proteingehalt verfügen als die vorstehend genannten Leguminosen.

Zur Gewinnung von Proteinpräparaten im industriellen Maßstab, insbesondere zur Herstellung von Proteinisolaten, die einen Proteingehalt von mehr als 90 % in Trockensubstanz enthalten, werden Leguminosen wie Soja oder Lupinen mehrstufigen Verfahrensschritten unterzogen.
Zunächst erfolgt eine Extraktion der in den proteinhaltigen Ausgangsstoffen enthaltenen Proteine mit Hilfe einer alkalischen wässrigen Lösung, nachdem gegebenenfalls die Ausgangsstoffe einer vorherigen sauren Vorextraktion unterzogen worden sind. Im Anschluss an die unter alkalischen Bedingungen durchgeführte Extraktion erfolgt eine Fällung der Proteine unter sauren Bedingungen. Die auf diese Weise gefällten Proteine werden letztendlich getrocknet und stehen für geeignete technische sowie auch nahrungsmittelbezogene Anwendungen zur Verfügung. Ein diesbezügliches bekanntes Herstellungsverfahren ist beispielsweise aus der DE 198 13 207 C1 zu entnehmen.

Die mit dem bekannten Herstellverfahren bzw. Isolierverfahren gewonnenen Proteinpräparate weisen nicht zuletzt aufgrund der bei ihrer Gewinnung angewandten Trennverfahren pH-Wert abhängige Löslichkeitseigenschaften auf, die insbesondere bei sauren pH-Werten ein markantes Minimum aufweisen, d.h., bei pH-Werten < 7 und insbesondere bei pH-werten von 4 bis 5 sind die auf diese Weise gewonnenen Proteinpräparate schlecht bzw. überhaupt nicht in Wasser löslich.

In gleicher Weise verhalten sich die mit den bekannten Verfahren gewonnenen Proteinpräparate hinsichtlich ihrer funktionellen Eigenschaften, beispielsweise bezüglich ihres Emulgier- sowie Schaumbildungsvermögens. So lassen sich die bekannten Proteinpräparate im sauren Bereich signifikant schlechter als im neutralen bzw. leicht alkalischen Bereich emulgieren, d.h., die Fähigkeit, Emulsionen zu stabilisieren, verschlechtert sich erheblich. Die Emulgierfähigkeit spielt insbesondere in der Nahrungsmittel- und Kosmetikindustrie eine bedeutende Rolle, beispielsweise bei der Herstellung von Dressings, Saucen, Mayonnaise oder kosmetischen Produkten wie Cremes oder Salben und technischen Produkten wie Kleber, Leime, Kautschukmischungen etc..

Für viele Anwendungen, beispielsweise im Bereich der Nahrungsmittelherstellung, der Kosmetik sowie auch im Bereich technischer Produkte, ist es jedoch wünschenswert, Proteinpräparate einzusetzen, deren funktionelle Eigenschaften weitgehend unabhängig von Parametern wie insbesondere pH-Wert, Ionenstärke und/oder Temperatur sind. Derartige Proteinpräparate sind jedoch mit heutigen Herstellverfahren insbesondere in großindustriellem Maßstab nicht zu gewinnen. Herstellungsverfahren für Proteinpräparate mit diesen Eigenschaftsprofilen beruhen auf der, der Proteingewinnung nachgeschalteten, technisch in der Regel sehr aufwendigen Modifizierung der Proteine, wie sie beispielsweise durch die Anwendung von hydrolytischen Enzymen vorgenommen werden kann.

### Darstellung der Erfindung

Der Erfindung liegt die Aufgabe zugrunde, ein Verfahren zur Gewinnung von Proteinpräparaten anzugeben, mit dem die Herstellung von Proteinpräparaten im industriellen Maßstab möglich ist, deren anwendungstechnisch funktionelle Eigenschaften, insbesondere hinsichtlich ihres Emulgier- und Schaumbildungsvermögens, weitgehend unabhängig vom pH-Wert im Bereich zwischen pH 3 und pH 10 sind. Überdies sollen die mit dem erfindungsgemäßen Verfahren hergestellten Proteinpräparate nahezu unveränderte Löslichkeitseigenschaften in Wasser auch für Temperaturen bis zu 100 °C aufweisen. Insbesondere sollen die Proteinpräparate ein breites Einsatzspektrum aufweisen, so dass sie in vielen Produkten bezüglich Nahrungsmitteln und technischen Produkten wie auch kosmetischen Produkten eingesetzt werden können.

Die Lösung der der Erfindung zugrundeliegenden Aufgabe ist im Anspruch 1 angegeben. Vorteilhafte Merkmale sind Gegenstand der Unteransprüche sowie der gesamten Beschreibung entnehmbar.

Ausgangsprodukt für das erfindungsgemäße Verfahren zur Gewinnung von Proteinpräparaten mit weitgehend gleichbleibenden funktionellen Eigenschaften innerhalb eines breiten pH-Bereiches von etwa pH 3 bis pH 10 sind die an sich bekannten proteinhaltigen Leguminosen oder Ölsaaten. Dem erfindungsgemäßen Verfahren liegen die im Kennzeichenteil des Anspruches 1 enthaltenen Merkmale zugrunde.

Die mit dem lösungsgemäßen Verfahren hergestellten neuartigen Proteinpräparate weisen einen Proteingehalt zwischen 60 und 95 % in Trockensubstanz, vorzugsweise zwischen 85 und 95 % in Trockensubstanz auf und verfügen über funktionelle Eigenschaften, die mit den bisher bekannten Verfahrenstechniken nicht erreichbar sind: So verfügen die neuartigen Proteinpräparate über eine hohe Löslichkeit sowie Wiederlöslichkeit in wässrigen Systemen im pH-Bereich zwischen 3 und 10. Ferner weisen sie eine Temperaturstabilität im gleichen breiten pH-Bereich auf und behalten ihre Löslichkeit auch bei Temperaturen von bis zu 100 °C bei. Insbesondere das Schaumbildungsvermögen sowie die Emulgierfähigkeit der neuartigen Proteinpräparate erweisen sich über den breiten pH-Bereich zwischen 3 und 10 als nahezu gleichbleibend gut. Schließlich weisen sie einen hohen Gehalt an schwefelhaltigen Aminosäuren auf, der insbesondere aus ernährungsphysiologischen Gründen sowie im Hinblick auf chemische Modifizierbarkeit besonders vorteilhaft ist.

Grund für ein derartig auffallend günstiges Verhalten hinsichtlich ihrer funktionellen Eigenschaften scheint der relativ hohe Gehalt an nicht fällbaren globulären Proteinfraktionen mit einem Molekulargewicht von ca. 200.000 D in den (insbesondere aus Lupinen) gewonnenen Proteinpräparaten zu sein. Alternative Möglichkeiten zur technischen Herstellung derartiger Proteinpräparate mit einem ähnlich hohen Anteil an nichtfällbaren globulären Proteinfraktionen sind bislang nicht bekannt.

Analytische Untersuchungen der mittels des erfindungsgemäßen Verfahrens gewonnenen Proteinpräparate, die aus Leguminosen, insbesondere Lupinensamen, stammen, weisen einen hohen Gehalt an Gamma-Conglutin auf, was einer Fraktion entspricht, die sich von allen anderen Proteinfraktionen hinsichtlich ihrer Aminosäurezusammensetzung sowie auch Löslichkeit und pH-abhängigen Löslichkeit deutlich unterscheidet.

### Wege zur Ausführung der Erfindung, gewerbliche Verwendbarkeit

Als Ausgangsmaterial für die zu gewinnenden Proteinpräparate eignen sich bevorzugt zerkleinerte, das heißt gemahlene, flockierte oder pelletierte Lupinensamen, die vorzugsweise aus geschälten Lupinen, wie beispielsweise L. albus, L. luteus, L. angustifolius, L. mutabilis entstammen. Die zerkleinerten Lupinensamen können fakultativ in einem Vorverfahren entölt werden, wie es beispielsweise aus der vorstehend genannten deutschen Druckschrift DE 198 13 207 C1 hervorgeht. Alternativ eignen sich als Ausgangsstoffe auch Sojabohnen, Erbsen, Getreide oder Ölsaaten.

Zunächst werden die zerkleinerten und fakultativ entölten Lupinensamen in einer sauren Wasserextraktion bei pH-Werten zwischen 3 und 6 extrahiert, wobei zwischen dem Lösungsmittel Wasser und dem gelösten Lupinensamenbruchstücken keine chemischen Reaktionen stattfinden. Die eigentliche Trennung bzw. Separierung zwischen den Feststoffanteilen, dem sogenannten Raffinat I, und dem Flüssiganteil, dem Extrakt I, können unterschiedliche Trennverfahren angewendet werden, wie beispielsweise die Verwendung eines Dekanters, Separators oder eines Filters. Auch eignen sich zur Separierung kontinuierlich arbeitende Trommelzentrifugen.

Das bei dieser Trennung gewonnene Raffinat I wird anschließend mit alkalisiertem Wasser bei pH-Werten von 7 bis 10 extrahiert und im Folgenden einer erneuten Fest-flüssig-Trennung in ein Extrakt II und ein Raffinat II aufgeteilt. Auch hierbei erfolgt die Separierung mit an sich bekannten Trennverfahren. Das nun im zweiten Trennschritt erhaltene Flüssigextrakt II wird durch dosierte Zugabe einer Säure auf einen pH-Wert zwischen 3 und 5,5 angesäuert, wodurch der überwiegende Teil der im flüssigen Extrakt II vorhandenen Proteine ausgefällt wird. Man erhält durch die Ansäuerung als Niederschlag ein gefälltes Protein in Form eines Proteinquarks sowie einen flüssigen Überstand.
Der durch die Ausfällung erhaltene Überstand wird nun in einer weiteren Fest-flüssig-Trennung, beispielsweise unter Verwendung einer kontinuierlich arbeitenden Trommelzentrifuge, vom Proteinquark getrennt, wodurch auf diese Weise flüssige Molke mit einem Proteingehalt von 85 bis 95 % in Trockensubstanz erhalten wird.

Das flüssige Extrakt I wird unmittelbar einem Membrantrennverfahren, beispielsweise einer Ultrafilteration, unterzogen, bei dem bereits als Retentat, also jenem Bestandteil, der durch die im Membrantrennverfahren eingesetzte Membran zurückgehalten wird, das Proteinpräparat mit den gewünschten funktionellen Eigenschaften erhalten wird. Die bei der Ultrafiltration eingesetzten Membranen weisen typischerweise Poren auf, durch die Teilchen bis zu 10.000, 20.000 oder 50.000 Dalton (D) permeieren können. Höhermolekulare Bestandteile, wie eben die gewünschten Proteine mit Molekulargewichten von bis zu 200.000 D, verbleiben auf diese Weise als Retentat zurück. Da trotz Ultrafiltration das Retentat lediglich ca. 50 % Proteingehalt in Trockensubstanz aufweist, kann die Konzentration des hochmolekularen Proteinpräparates in der als Retentat vorliegenden Molke gesteigert werden, indem das Retentat durch Anwendung einer Diafiltration gewaschen wird. Als Waschflüssigkeit wird die gewonnene Molke, die aus dem Überstand durch Fest-flüssig-Trennung erhalten wird, bei der Durchführung der Diafiltration eingesetzt. Die Verwendung der Molke als Waschflüssigkeit ergibt Vorteile in Bezug auf den Wasserhaushalt des gesamten Verfahrens, wodurch die technische Effizienz bzw. Effektivität gesteigert werden kann. Durch Trocknung, vorzugsweise Sprühtrocknung des gewaschenen Retentats, eventuell in Verbindung mit einer Wirbelschichtbehandlung, kann das Protein als Trockenprodukt mit geeigneter Partikelkonfektionierung erhalten werden.

Das hierbei gewonnene hochmolekulare Proteinpräparat zeichnet sich insbesondere durch seine besonders gute Löslichkeit in einem sehr breiten pH-Bereich aus. Die bei der Diafiltration abgetrennten Flüssiganteile enthalten im Wesentlichen Wasser sowie niedermolekulare Bestandteile wie Zucker, Salze, Aminosäuren und Peptide, die in Form von Abwasser verworfen werden oder zur Gewinnung von Einzelsubstanzen weiter aufbereitet werden können.

Das Proteinpräparat weist überdies einen sehr hohen Gehalt an schwefelhaltigen Aminosäuren auf und eignet sich deshalb besonders gut für ernährungsphysiologisch anspruchsvolle Anwendungen, beispielsweise für eine Beimengung in Babynahrung, Gesundheitsprodukten sowie Produkten für die klinische Ernährung. Weiterhin weisen die Proteinpräparate besonders gute Schaumbildungseigenschaften auf, die im Wert für das Schaumvolumen gängige Produkte bis zum 3fachen übertreffen.

Die Proteinpräparate zeigen über den anwendungstechnisch relevanten pH-Bereich (pH 2 bis 12) sehr gute Löslichkeiten in Wasser.

Vorzugsweise werden die Extraktionsschritte und die Fest-flüssig-Trennungsprozesse, bei denen vorzugsweise Wasser als Lösungsmittel eingesetzt wird, bei Temperaturen zwischen 5 und 70 °C durchgeführt, wobei Temperaturen von 15 bis 60 °C besonders geeignet sind. Die Zugabe von Wasser als Lösungsmittel für die Extraktion erfolgt derart, dass ein Feststoff-Flüssigkeits-Verhältnis zwischen 1:3 bis 1:15 erhalten wird, wobei bevorzugte Verhältnisse zwischen 1:4 und 1:10 liegen.

Grundsätzlich kann die Ultrafiltration bei pH-Werten zwischen 3,5 und 9 erfolgen, wobei bevorzugte pH-Werte zwischen 6 und 8 liegen. Vor der Durchführung der Ultrafiltration kann die zu behandelnde Molke vorzugsweise pasteurisiert oder einer Hochtemperatur-Behandlung unterzogen werden. Typische Temperaturen bei der Durchführung der Ultrafiltration liegen zwischen 10 und 80 ° C, vorzugsweise zwischen 60 bis 80 ° C. Die bei der Ultrafiltration eingesetzten Membranen weisen überdies selektierende Membranöffnungen auf, durch die Teilchen mit Molekülgrößen bis zu 100 000 D permeieren können.

Die so hergestellten Proteinpräparate weisen einen Proteingehalt von >80% in Trockensubstanz auf, vorzugsweise >85%. Ihr Salzgehalt beträgt typischerweise 3 bis 5%. Im Falle einer extraktiven Entölung des Rohstoffs liegt der Fettgehalt der hergestellten Proteinpräparate unter 1%, wobei die durch die Verfahrensvariante 2 hergestellten Proteinpräparate einen besonders niedrigen Fettgehalt aufweisen.

Durch die besonders günstigen funktionellen Eigenschaften, insbesondere hinsichtlich ihrer Löslichkeit, Thermostabilität, ihres Emulgiervermögens sowie Schaumbildungsvermögens wie auch Gelbildungsvermögens, die sich allesamt nahezu gleichbleibend im gesamten pH-Bereich verhalten, eignen sich die neuartigen hochmolekularen Proteinpräparate für eine Vielzahl wichtiger Anwendungen. So dienen sie als Zusatzstoffe zu folgenden Produkten: Schäume, Gele oder gelartige Stoffe, Lebensmittel, Getränke, Futtermittel oder kosmetische Produkte und technische Produkte wie Kleber, pastöse Schmiermittel, Farben etc..

Durch den Einsatz der neuartigen Proteinpräparate können die funktionellen Eigenschaften der einzelnen Produkte, beispielsweise hinsichtlich ihrer Löslichkeit, ihrer Emulgierfähigkeit, ihrer Temperaturstabilität, ihres Schaumbildungsvermögens oder Gelbildungseigenschaften, gezielt eingestellt werden.

Schließlich bieten die neuartigen Proteine aufgrund ihrer hohen Anteile an schwefelhaltigen Aminosäuren die Möglichkeit der Derivatisierung, d.h. die Umwandlung in bestimmte Proteinverbindungen, die für spezielle Anwendungszwecke besonders geeignet sind. Dies eröffnet ein breites Spektrum für die Herstellung weiterer neuartiger modifizierter Präparate.

## Patentansprüche

1. Verfahren zur Gewinnung von Proteinpräparaten mit weitgehend gleich bleibenden anwendungstechnisch-funktionellen Eigenschaften innerhalb eines breiten pH-Bereiches von etwa pH 3 bis pH 10 mittels Extraktion aus einem proteinhaltigen Ausgangsprodukt, nämlich Leguminosen, Getreide oder Ölsaaten, **gekennzeichnet durch** folgende Verfahrensschritte:
a) Zerkleinern des Ausgangsproduktes und Beimischen des zerkleinerten Ausgangsproduktes in ein erstes saures Lösungsmittel zum Erhalt einer sauren Suspension,
b) Auftrennen der sauren Suspension im Wege einer Fest-flüssig-Trennung in ein Raffinat I und ein Extrakt I bei Temperaturen zwischen 5 und 70 °C,
c) Zugabe des Raffinats I in ein basisches Lösungsmittel zum Erhalt einer basischen Suspension,
d) Auftrennen der basischen Suspension im Wege einer Fest-flüssig-Trennung in ein Raffinat II und ein Extrakt II,
e) Ansäuern des Extraktes II und Ausfällen von Proteinen aus dem angesäuerten Extrakt II in Form von Proteinquark, zum Erhalt eines flüssigen Überstandes,
f) Abtrennen des flüssigen Überstandes im Wege einer Fest-flüssig-Trennung zum Erhalt einer Molke mit einem Proteingehalt von >80 % in Trockensubstanz,
g) Beimischen der Molke zu einem Retentat, das **durch** Auftrennen des Extraktes I unter Verwendung eines Membrantrennverfahrens erhalten wird, in dem Proteinpräparate mit den gewünschten Eigenschaften enthalten sind, und die Molke als Waschflüssigkeit im Rahmen einer Diafiltration verwendet wird, und
h) Waschen der im Retentat erhaltenen Proteine mit den gewünschten Eigenschaften enthält.

2. Verfahren nach Anspruch 1,
**dadurch gekennzeichnet, dass** das beim Waschen erhaltene Retentat sprühgetrocknet wird.

3. Verfahren nach Anspruch 1 oder 2,
**dadurch gekennzeichnet, dass** die saure Suspension einen pH-Wert zwischen 3 und 5 aufweist.

4. Verfahren nach einem der Ansprüche 1 bis 3,
**dadurch gekennzeichnet, dass** das Ausgangsprodukt Lupinensamen ist, insbesondere L. albus, L. luteus, L. angustifolius oder L. mutabilis.

5. Verfahren nach einem der Ansprüche 1 bis 4,
**dadurch gekennzeichnet, dass** als Ausgangsprodukt gemahlene, flockierte, pelletierte und/oder geschälte Lupinen oder anderweitige Leguminosen oder Getreide oder Ölsaaten verwendet werden.

6. Verfahren nach einem der Ansprüche 1 bis 5,
**dadurch gekennzeichnet, dass** das Ausgangsprodukt entölt wird.

7. Verfahren nach einem der Ansprüche 1 bis 6,
**dadurch gekennzeichnet, dass** zum Membrantrennverfahren Trennmembranen mit Ausschlußgrößen eingesetzt werden, die im Bereich zwischen 5000 und 200,000 D liegen.

8. Verfahren nach einem der Ansprüche 1 bis 7,
**dadurch gekennzeichnet, dass** als Lösungsmittel Wasser verwendet wird, das je nach pH-Wert Einstellung angesäuert oder mit alkalischen Substanzen versetzt wird.

9. Verfahren nach einem der Ansprüche 1 bis 8,
**dadurch gekennzeichnet, dass** die Extraktionen bei Temperaturen zwischen 15 und 60 °C durchgeführt werden,
dass bei den Extraktionen Feststoff-Flüssigkeitsverhältnisse von 1:4 bis 1:10 eingehalten werden.

10. Verfahren nach einem der Ansprüche 1 bis 9,
**dadurch gekennzeichnet, dass** bei der Durchführung des Membrantrennverfahrens ein pH-Wert zwischen 6 und 8 eingestellt wird, und
dass eine Temperatur während des Membrantrennverfahrens zwischen 60 und 80 °C eingestellt wird.

## Claims

1. Method for producing protein preparations with substantially constant properties with respect to application and function within a broad pH range of about pH 3 to pH 10 by means of extraction from a proteinaceous starting product, namely legumes, cereal or oil-bearing seeds, **characterised by** the following method steps:
a) crushing the starting product and mixing the crushed starting product into a first acid solvent to obtain an acid suspension,
b) separating the acid suspension by means of a solid-liquid separation into a raffinate I and an extract I at temperatures between 5 and 70°C,
c) adding raffinate I to a basic solvent to obtain a basic suspension,
d) separating the basic suspension by means of a solid-liquid separation into a raffinate II and an extract II,
e) acidifying extract II. and precipitating proteins out of the acidified extract II in the form of protein quark to obtain a liquid supernatant,
f) separating the liquid supernatant by means of a solid-liquid separation to obtain a whey with a protein content of >80% in dry substance,
g) mixing the whey with a retentate, which is obtained by separating extract I using a membrane separation process, in which protein preparations with the desired properties are contained, and the whey is used as washing liquor as part of a diafiltration process, and
h) washing the proteins with the desired properties obtained in the retentate.

2. Method according to claim 1, **characterised in that** the retentate obtained during washing is spray-dried.

3. Method according to claim 1 or 2, **characterised in that** the acid suspension has a pH value between 3 and 5.

4. Method according to one of claims 1 to 3, **characterised in that** the starting product is lupine seeds, in particular L. albus, L. luteus, L. angustifolius or L. mutabilis.

5. Method according to one of claims 1 to 4, **characterised in that** ground, flaked, pelleted and/or husked lupines or other legumes or cereal or oil-bearing seeds are used as starting product.

6. Method according to one of claims 1 to 5, **characterised in that** the starting product is deoiled.

7. Method according to one of claims 1 to 6, **characterised in that** separation membranes with exclusion sizes in the range of between 5000 and 200,000 D are used for the membrane separation process.

8. Method according to one of claims 1 to 7, **characterised in that** water, which is acidified according to the pH setting or is mixed with alkaline substances, is used as solvent.

9. Method according to one of claims 1 to 8, **characterised in that** the extractions are conducted at temperatures between 15 and 60°C, that solid-liquid ratios of 1:4 to 1:10 are maintained in the extractions.

10. Method according to one of claims 1 to 9, **characterised in that** a pH value of between 6 and 8 is set when conducting the membrane separation process, and that a temperature of between 60 and 80°C is set during the membrane separation process.

## Revendications

1. Procédé d'obtention de préparations protéiques dont les propriétés fonctionnelles et d'application technique restent sensiblement les mêmes dans une large gamme de pH d'environ pH 3 à pH 10 par extraction à partir d'un produit de départ renfermant des protéines, à savoir des légumineuses, des céréales ou des semences huileuses
**caractérisé par** les étapes suivantes :
a) broyage du produit de départ et ajout du produit de départ broyé à un premier solvant acide pour obtenir une suspension acide,
b) rupture de la suspension acide par la voie d'une séparation solide - liquide en un raffinat I et un extrait I à des températures comprises entre 5°C et 70°C,
c) addition du raffinat I dans un solvant basique pour obtenir une suspension basique,
d) rupture de la suspension basique par la voie d'une séparation solide - liquide en un raffinat II et un extrait II,
e) acidification de l'extrait II et précipitation de protéines à partir de cet extrait II acidifié sous la forme d'un précipité caillebotté protéiné pour obtenir un surnageant liquide,
f) séparation du surnageant liquide par la voie d'une séparation solide - liquide pour obtenir un sérum liquide ayant une teneur en protéines > 80 % en substances sèches,
g) ajout du sérum liquide à un rétentat obtenu par rupture de l'extrait I en utilisant un procédé de séparation par membrane et contenant des préparations protéiques ayant les propriétés souhaitées et utilisation du sérum liquide en tant que liquide de lavage dans le cadre d'une diafiltration, et
h) lavage des protéines ayant les propriétés souhaitées contenues dans le rétentat.

2. Procédé selon la revendication 1,
**caractérisé en ce qu'**
on sèche par pulvérisation le produit de rétention obtenu par lavage.

3. Procédé selon la revendication 1 ou la revendication 2,
**caractérisé en ce que**
la suspension acide présente un pH compris entre 3 et 5.

4. Procédé selon l'une des revendications 1 à 3,
**caractérisé en ce que**
le produit de départ est constitué de graines de lupins, en particulier de *L. albus, L. luteus, L. angustifolius ou L. mutabilis.*

5. Procédé selon l'une des revendications 1 à 4,
**caractérisé en ce qu'**
en tant que produit de départ, on utilise des lupins pulvérisés, floculés, agglomérés en boulettes et/ou décortiqués ou d'autres légumineuses ou céréales ou semences huileuses.

6. Procédé selon l'une des revendications 1 à 5,
**caractérisé en ce que**
le produit de départ est déshuilé.

7. Procédé selon l'une des revendications 1 à 6,
**caractérisé en ce que**
pour le procédé de séparation par membrane, on utilise des membranes de séparation ayant des mailles de sélection situées dans la gamme comprise entre 5 000 et 200 000 D.

8. Procédé selon l'une des revendications 1 à 7,
**caractérisé en ce qu'**
en tant que solvant, on utilise de l'eau qui, selon le réglage de la valeur du pH, est acidifiée, ou modifiée avec des substances alcalines.

9. Procédé selon l'une des revendications 1 à 8,
**caractérisé en ce qu'**
on met en oeuvre les extractions à des températures comprises entre 15°C et 60°C et lors des extractions, on maintient les rapports solide - liquide entre 1:4 et 1:10.

10. Procédé selon l'une des revendications 1 à 9,
**caractérisé en ce que**
lors de la mise en oeuvre du procédé de séparation par membrane, on règle la valeur du pH entre 6 et 8 et, pendant le procédé de séparation par membrane, on règle une température comprise entre 60°C et 80°C.
